# FASCICULE DE BREVET EUROPEEN

(11) **EP 2 379 313 B1**
(45) Date de publication et mention de la délivrance du brevet: **19.03.2014**
(21) Numéro de dépôt: 09805735.9
(22) Date de dépôt: 17.12.2009
(51) Int. Cl.: B29C 70/34, B29C 33/48, B64C 1/06

(54) **FERRURE COMPOSITE EN L AINSI QUE PROCEDE ET MOULE POUR SA FABRICATION**
L-FÖRMIGES VERBUNDANSCHLUSSSTÜCK UND VERFAHREN UND FORM ZU DESSEN HERSTELLUNG
COMPOSITE L-SHAPED FITTING AND METHOD AND MOULD FOR THE PRODUCTION THEREOF

(30) Priorité: 24.12.2008 FR 0859056
(43) Date de publication de la demande: 26.10.2011
(73) Titulaire: SKF Aerospace France, 26241 Saint Vallier (FR)
(72) Inventeur: VALEMBOIS, Guy, F-31400 Toulouse (FR)
(74) Mandataire: Rhein, Alain
(86) Numéro de dépôt international: PCT/FR2009/052599
(87) Numéro de publication internationale: WO 2010/072952

(56) Documents cités:
- DE-A1- 4 234 002
- FR-A1- 2 717 735
- GB-A- 2 444 645
- US-A- 1 916 435

## Description

La présente invention a pour objet une ferrure en L, venant de moulage d'un matériau composite, ainsi que son procédé de fabrication et le moule pour la mise en oeuvre dudit procédé.

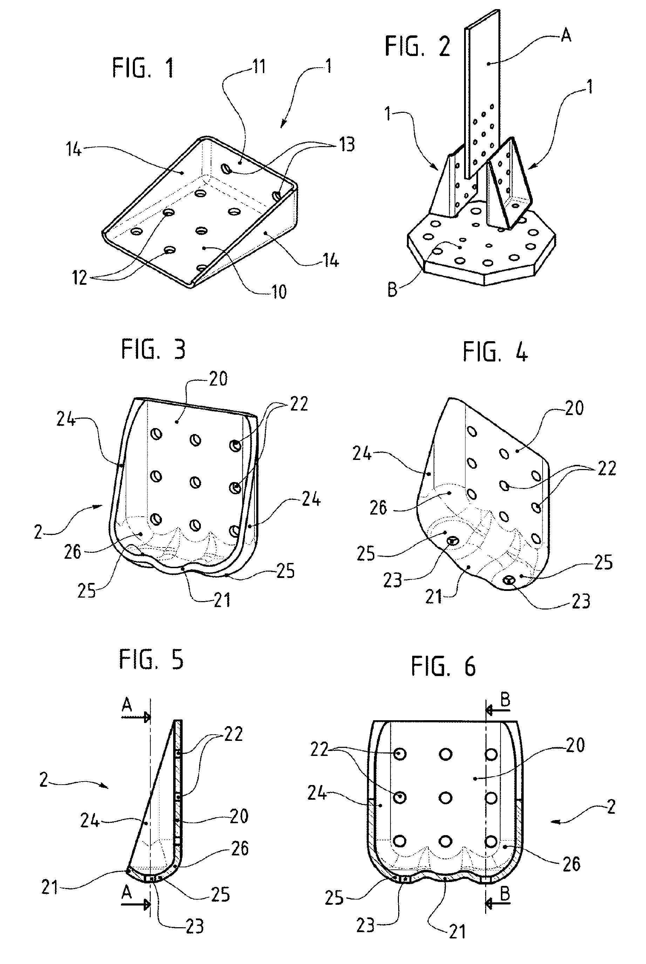

La figure 1 du dessin joint en annexe représente une ferrure 1 en L réalisée en matériau composite, actuellement utilisée, notamment dans le domaine de l'aéronautique dans un but d'assemblage de pièces. Cette ferrure 1 vient de moulage d'un matériau composite, elle comporte essentiellement deux parties 10 et 11 faisant entre-elles un angle, en l'occurrence un angle droit, percées de trous, respectivement 12 et 13, pour permettre une solidarisation, et équerrées par des renforts latéraux 14.

Une telle ferrure 1 est destinée, comme cela est représenté sur la figure 2, à être utilisée par paire pour l'assemblage et la fixation de deux pièces A et B dont l'une est perpendiculaire à l'autre, l'une des deux pièces, A, étant enserrée par deux ferrures 1, l'ensemble étant solidarisé au travers de moyens de fixation, non représentés, tels que des boulons.

Ces ferrures 1 sont soumises à des efforts en traction et en compression, et elles doivent de ce fait répondre à un cahier des charges rigoureux, cependant, du fait de leur réalisation en matériau composite, ces ferrures sont soumises, lors de leur sollicitation, à des déformations en flexion qui génèrent un délaminage des fibres.

De telles ferrures sont décrites dans le document GB 2 444 645, l'une réalisée en métal et l'autre réalisée en matériau composite. Ces deux ferrures diffèrent essentiellement en ce que celle réalisée en matériau composite présente des parois munies de surépaisseurs destinées au renforcement de la structure, en sorte de tenter de pallier les inconvénients liés au choix du matériau.

La solution consistant à épaissir les parois, ne permet d'accroître que faiblement la résistance de la structure, tout en présentant d'autres inconvénients tels que l'augmentation de l'encombrement et du poids de la ferrure.

La présente invention a pour but de proposer une ferrure en L venant de moulage d'un matériau composite, dont la conception nouvelle permet non seulement de répondre au cahier des charges précité, mais également de remédier aux inconvénients de détérioration lorsqu'elle est sollicitée en traction ou en compression, et sans présenter les inconvénients liés à l'ajout de matière.

La ferrure en L, venant de moulage d'un matériau composite, selon l'invention, comprend deux parties faisant entre-elles un angle, et percées de trous pour permettre la solidarisation de deux pièces au travers de moyens de fixation, et équerrées par des renforts latéraux, et elle se caractérise essentiellement en ce qu'au moins l'une desdites deux parties présente, du côté intérieur de la ferrure, un profil courbe concave, et en ce que le ou les trous pratiqués dans la ou les parties présentant du côté intérieur un profil courbe concave, sont réalisés chacun selon un axe radial à la courbure.

Selon une caractéristique additionnelle de la ferrure en L selon l'invention, la zone de rattachement des deux parties présente du côté intérieur un profil courbe concave.

Selon une autre caractéristique additionnelle de la ferrure en L selon l'invention, les renforts latéraux présentent un profil bombé, concave du côté intérieur.

Selon une autre caractéristique additionnelle de la ferrure en L selon l'invention, au moins l'une des parties présente une face extérieure d'accouplement plane.

Cette caractéristique permet notamment d'augmenter la résistance à la rupture en compression, plus particulièrement, mais non limitativement, lorsque la direction de l'effort de compression est sensiblement constante et perpendiculaire à la face d'accouplement plane.

Selon une autre caractéristique additionnelle de la ferrure en L selon l'invention, la face extérieure d'accouplement plane de l'une des parties, consiste en la face extérieure d'un élément surmoulé sur ladite partie convexe extérieurement.

La paroi de la ferrure au niveau de la zone de profil courbe, permet de transmettre les efforts dans le matériau composite en évitant le cisaillement et la traction inter laminaire.

On notera que les interfaces au niveau du ou des trous réalisés dans une zone de profil sphérique ou cylindrique, notamment lorsque les faces d'accouplement ne sont pas planes, sont réalisées au travers d'éléments de portée sphérique ou cylindrique, tels que des rondelles de forme adaptée.

Le procédé de fabrication de la ferrure en L, venant de moulage d'un matériau composite, selon l'invention, consiste à réaliser les étapes successives suivantes :
- disposer sur les parois internes de l'empreinte creuse d'un moule reproduisant la forme extérieure à donner à ladite ferrure en L, des fibres pré imprégnées sous formes de tissus ou d'unidirectionnels,
- introduire dans ladite empreinte un noyau à géométrie variable,
- développer ledit noyau jusqu'à ce qu'il prenne extérieurement la forme intérieure de ladite ferrure en L,
- appliquer des conditions particulières de pression et/ou de température, en sorte de réaliser la polymérisation dudit matériau composite.

Le moule permettant la mise en oeuvre du procédé de fabrication de la ferrure en L selon l'invention, se caractérise essentiellement en ce qu'il comprend une partie comprenant une empreinte creuse reproduisant la forme extérieure de ladite ferrure en L, une seconde partie ou noyau constituée de l'association de plusieurs éléments, prévus aptes à pouvoir glisser l'un contre l'autre au travers de surfaces obliques, l'un au moins desdits éléments formant coin pour permettre lors de son insertion de déformer ledit noyau en expansion en sorte qu'il présente extérieurement la forme intérieure de ladite ferrure en L.

Les avantages et les caractéristiques de la ferrure selon l'invention, ressortiront plus clairement de la description qui suit et qui se rapporte au dessin annexé, lequel en représente un mode de réalisation non limitatif.

Dans le dessin annexé :
- la figure 1 représente une vue schématique en perspective d'une ferrure en L de l'état de la technique.
- la figure 2 représente une vue schématique en perspective et en éclaté d'un montage utilisant des ferrures en L de l'état de la technique.
- la figure 3 représente une vue schématique en perspective d'une ferrure en L selon l'invention.
- la figure 4 représente une vue schématique en perspective sous un autre angle de la même ferrure.
- la figure 5 représente une vue schématique en coupe selon l'axe BB de la figure 6 de la même ferrure.
- la figure 6 représente une vue représente une vue schématique en coupe selon l'axe AA de la figure 5 de la même ferrure.
- les figures 7 et 8 représentent des résultats d'essais de traction sur des ferrures.
- les figures 9 et 10 représentent des résultats d'essais de compression sur des ferrures.
- la figure 11 représente une vue schématique en perspective d'une variante de la ferrure en L selon l'invention.
- la figure 12 représente des résultats d'essais de compression sur la ferrure représentée à la figure 11.
- les figures 13 et 14 représentent des vues schématiques en plan d'un moule de fabrication d'une ferrure en L selon l'invention.

Sur les figures 3, 4, 5 et 6 on peut voir une ferrure 2 en L selon l'invention. Cette ferrure 2 comprend deux parties 20 et 21 faisant entre-elles un angle, en l'occurrence un angle droit, percées de trous, respectivement 22 et 23, et équerrées par des renforts latéraux 24.

Si la partie 20 est plane, la partie 21 quant à elle présente un profil courbe, lequel crée deux déformations 25 en forme de calotte sphérique, concave du côté intérieur et convexe du côté extérieur, et au pôle de chacune desquelles est percé un trou 23, d'axe radial aux déformations 25, permettant le passage d'un moyen de fixation, non représenté, la vis d'un boulon par exemple.

On notera que le choix de l'emplacement des trous 23 est fonction de l'utilisation de la ferrure 2 et surtout des directions des efforts qu'elle doit supporter, puisque l'emplacement d'un trou 23 est caractérisé par un axe. En l'occurrence, pour la ferrure 2 représentée, le choix des pôles est un cas particulier.

On notera de plus, que de manière avantageuse, il est possible que les axes des trous 23 ne soient pas parallèles.

Par ailleurs les parties les renforts latéraux 24 présentent également un profil courbe, concave intérieurement et convexe extérieurement.

On notera que la zone 26, de rattachement des deux parties 20 et 21 entre elles, présente un profil courbe, concave intérieurement et convexe extérieurement, au travers de laquelle s'opère la transmission des efforts d'une partie à l'autre. Les fibres, qui dans cette zone relient les deux parties 20 et 21, suivent cette courbure, et permettent le transfert de charge.

Afin de mesurer les avantages de la ferrure 2 par rapport à une ferrure 1 réalisée en matériau composite et actuellement utilisée, celles-ci ont été soumises à des tests comparatifs qui vont être maintenant décrits.

On notera préalablement que les ferrures 1 et 2 utilisées lors de ces tests ont été moulées avec des tissus issus d'un même lot, et utilisant le même nombre de plis pour une même épaisseur, et avec un même procédé, polymérisés selon le même cycle thermique. Tandis que lors des tests sont appliquées des charges successives croissantes, afin de visualiser l'état de la ferrure à chaque niveau de charge.

Les premiers tests consistent à examiner le comportement des ferrures 1 et 2 lors d'efforts en traction.

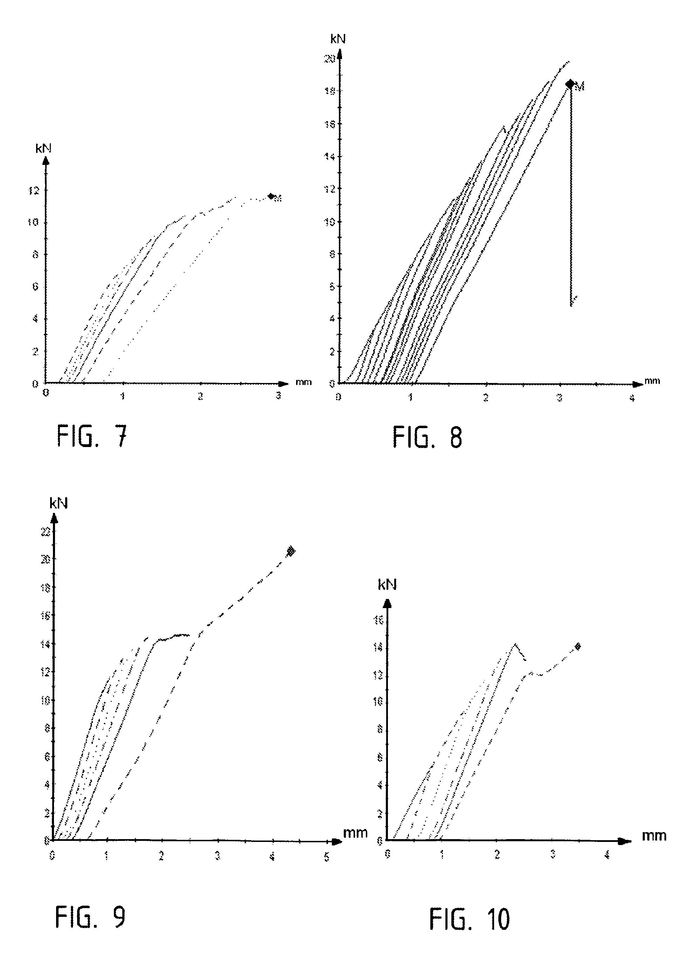

Sur la figure 7 on a représenté le graphique reproduisant les résultats des essais de traction sur une ferrure 1.

On notera que le décalage du point de départ de chaque courbe correspond au rattrapage de jeu de la machine de traction après chaque décharge, et que les courbes des cinq premières montées en charge ne sont pas reproduites.

Les premiers craquements, dits premiers dommages, sont entendus lors de la 6^{ème} montée en charge, à partir d'environ 5400 N, sans dégradation visuelle de la ferrure. A partir de cette charge, la ferrure va « croustiller » de façon quasi continue, ce qui correspond à la rupture de fibres. Pour les tractions suivantes, les craquements ne reprennent toujours qu'à partir du niveau de charge précédent. On constate sur les différentes courbes, un changement de la pente, ce qui correspond à une diminution de la rigidité, conséquence des ruptures de fibres. A partir d'environ 9000 N, les craquements s'intensifient, sans pour autant faire apparaître visuellement de rupture, de délaminage ou de déformation irréversible.

Vers 10500 N, la ferrure se déforme fortement mais cette déformation est toutefois réversible. A 11500 N on observe la même déformation mais cette fois de façon irréversible, tandis qu'à 11600 N il y a rupture.

Sur la figure 8 on a représenté le graphique reproduisant les résultats des essais de traction sur une ferrure 2 selon l'invention.

Le premier craquement intervient vers 15500 N, sans laisser apparaître d'endommagement. A partir de cette charge, la ferrure 2 se comporte de la même façon que la ferrure 1, reprise des craquements à partir du niveau de charge précédent, et diminution de la rigidité.

Le premier défaut visible apparaît vers 19900N, c'est un délaminage, lequel n'est visible que sous charge, et disparaît visuellement lorsqu'on relâche l'effort, puis à 18500N la ferrure 2 cède.

Sur la figure 9 on a représenté le graphique reproduisant les résultats des essais de compression sur une ferrure 1.

Sur chaque ferrure on applique des charges successives croissantes, pour visualiser l'état de la ferrure à chaque niveau de charge. Le décalage du point de départ de chaque courbe correspond au rattrapage de jeu de la machine de traction après chaque décharge.

Les premiers craquements apparaissent vers 11400 N, ils continuent, sans conséquences visibles, jusqu'à 13500 N, puis c'est l'effondrement à 13700 N.

Sur la figure 10 on a représenté le graphique reproduisant les résultats des essais de compression sur une ferrure 2 selon l'invention.

Les premiers craquements interviennent vers 12500 N, sans laisser apparaître d'endommagement. A partir de cette charge, les craquements reprennent à partir de la charge maximum de l'essai précédent. Aucun dégât visible n'est constaté jusqu'au cinquième essai, où vers 13800 N se produit un délaminage important, l'essai suivant confirmant que la ferrure est détruite.

Le tableau suivant résume les résultats obtenus :

| | Ferrure 1 | Ferrure 2 | U |
|---|---|---|---|
| MASSE | 22 | 16 | g |
| Résistance rupture traction | 10500 | 19900 | N |
| Résistance rupture compression | 13500 | 13800 | N |

On peut ainsi constater que la ferrure 2 selon l'invention présente des caractéristiques de résistance à la rupture en traction très supérieure à celles d'une ferrure 1, mais que cependant les caractéristiques de résistance à la rupture en compression sont identiques.

On notera toutefois que dans les cas étudiés, la ferrure 2 présente une masse inférieure à celle de la ferrure 1, en sorte que l'on peut envisager qu'à poids égal, au travers d'un épaississement des parois, la ferrure 2 peut présenter un accroissement, éventuellement proportionnel, de ses caractéristiques de résistance à la rupture, aussi bien à la traction qu'à la compression.

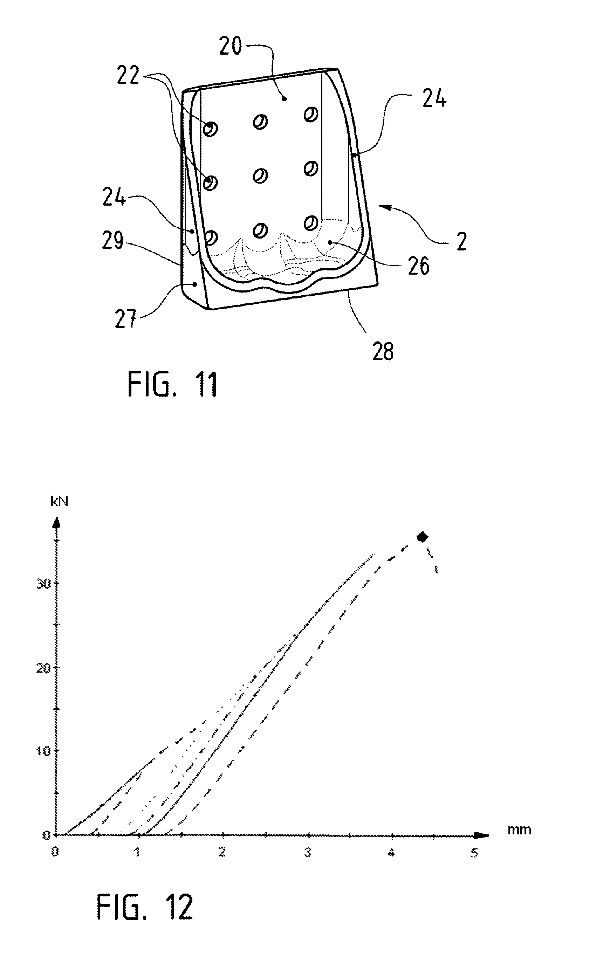

En référence maintenant à la figure 11, on peut voir une variante de la ferrure 2 en L, qui consiste en une ferrure 2 sur la partie 21 de laquelle a été surmoulé un talon 27, lequel présente extérieurement une face d'accouplement 28, plane, en l'occurrence perpendiculaire à la face extérieure 29 plane de la partie 20.

La partie 21 conserve sa concavité du côté intérieur, de même que la zone 26 de rattachement des deux parties 20 et 21. Par contre la surface de compression est plane ce qui évite l'utilisation d'éléments de portée sphérique ou cylindrique, tels que des rondelles de forme adaptée, pour réaliser l'interface du côté extérieur.

Du point de vue fabrication, le talon 27 est surmoulé sous haute pression, sur la partie 21 de la ferrure 2, après fabrication de cette dernière. Ainsi, la ferrure 2 de conserve la même architecture, le talon 27 constituant une interface.

Une telle ferrure 2 munie d'un talon 27 a été testée dans les mêmes conditions que l'ont été les ferrures 1 et 2 sans talon. Les tests de rupture en traction ont donné les mêmes résultats que ceux réalisés sur une ferrure 2 sans talon. Les résultats des tests de rupture en compression sont reportés sur le graphique de la figure 12.

Les premiers craquements sont perçus vers 33000 N au cinquième essai, tandis que la rupture intervient à 35000 N.

Le tableau suivant résume les résultats obtenus :

| | Ferrure 1 | Ferrure 2 avec talon | U |
|---|---|---|---|
| MASSE | 22 | 21 | g |
| Résistance rupture traction | 10500 | 19900 | N |
| Résistance rupture compression | 13500 | 33500 | N |

On peut donc constater la supériorité des performances de la ferrure 2 avec talon 27 selon l'invention, bien qu'elle soit encore, en l'occurrence, d'une masse inférieure à celle de la ferrure 1 testée.

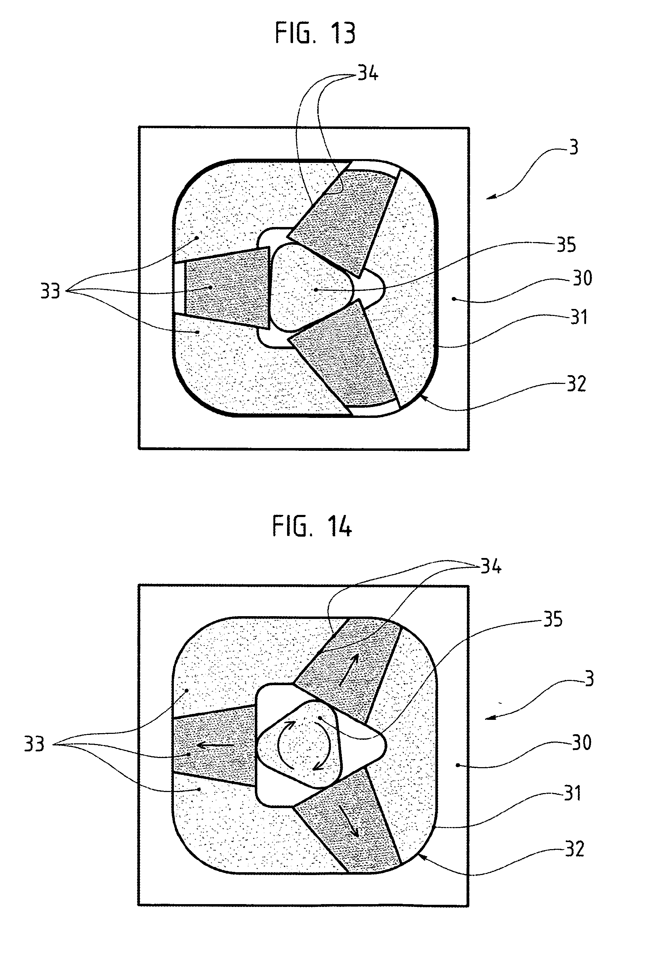

En référence maintenant aux figures 13 et 14, on peut voir un moule 3 permettant la fabrication par moulage d'une pièce selon le procédé de fabrication d'une ferrure 2 selon l'invention.

Le moule 3 comporte d'une part une partie 30 dans laquelle est pratiquée une empreinte creuse 31 correspondant à la forme extérieure de la pièce à mouler, et d'autre part un ensemble 32 de pièces 33 indépendantes, mobiles les unes par rapport aux autres, prévues aptes à pouvoir glisser l'une contre l'autre au travers de surfaces obliques 34, et qui assemblées dans une certaine position permettent que l'ensemble 32 reproduise la forme intérieure exacte de la pièce à mouler, tandis que certaines de ces pièces 33, qui présentent une forme de coin, peuvent, au travers des surfaces obliques, être repoussées vers l'intérieur de l'ensemble 32, en sorte de permettre une contraction de l'ensemble 32.

On comprendra qu'en utilisation, l'empreinte creuse 31 est garnie d'une couche de fibres pré imprégnées sous forme de tissus ou d'unidirectionnels, puis l'ensemble 32, sous sa forme contractée est introduit dans l'empreinte creuse 31, enfin les éléments 33 en forme de coin sont repoussés vers l'extérieur au moyen d'une came 35 afin que l'ensemble 32 prenne sa forme expansée et ainsi presse la couche 5 matériau composite.

On notera que ce procédé de moulage et le moule qui permet sa mise en oeuvre ne sont pas réservés exclusivement à la fabrication d'une ferrure 2, mais peuvent parfaitement être appliqués à la fabrication d'autres objets.

## Revendications

1. Ferrure en L, venant de moulage d'un matériau composite, comprenant deux parties (20, 21) faisant entre-elles un angle, et percées de trous (22, 23) pour permettre la solidarisation de deux pièces au travers de moyen de fixation, et équerrées par des renforts latéraux (24), **caractérisée en ce qu'**au moins l'une (21) desdites deux parties (20, 21) présente, du côté intérieur de la ferrure (2), un profil courbe concave, et **en ce que** le ou les trous (23) pratiqués dans la ou les parties (20, 21) présentant du côté intérieur un profil courbe concave, sont réalisés chacun selon un axe radial à la courbure.

2. Ferrure en L selon la revendication 1, **caractérisée en ce que** la zone (26) de rattachement des deux parties (20, 21) entre elles, présente du côté intérieur un profil courbe concave.

3. Ferrure en L selon la revendication 1 ou la revendication 2, **caractérisée en ce que** les renforts latéraux (24) présentent un profil bombé, concave du côté intérieur.

4. Ferrure en L selon l'une quelconque des revendications précédentes, **caractérisée en ce qu'**au moins l'une des parties (20, 21) présente une face extérieure d'accouplement plane (28, 29).

5. Ferrure en L selon la revendication 4, **caractérisée en ce que** la face extérieure d'accouplement plane (28) de l'une des parties (21), consiste en la face extérieure d'un élément (27) surmoulé sur ladite partie (21) convexe extérieurement.

6. Procédé de fabrication de la ferrure en L venant de moulage d'un matériau composite selon l'une quelconque des revendications précédentes, **caractérisé en ce qu'**il consiste à réaliser les étapes successives suivantes :
- disposer sur les parois internes de l'empreinte creuse (31) d'un moule (30) reproduisant la forme extérieure à donner à ladite ferrure en L (2), des fibres pré imprégnées sous formes de tissus ou d'unidirectionnels,
- introduire dans ladite empreinte creuse (31) un noyau à géométrie variable (32),
- développer vers l'extérieur ledit noyau (32) jusqu'à ce qu'il prenne extérieurement la forme intérieure de ladite ferrure en L (2),
- appliquer des conditions particulières de pression et/ou de température, en sorte de réaliser la polymérisation dudit matériau composite.

7. Procédé selon la revendication 6, **caractérisé en ce qu'**on surmoule sur au moins l'une des deux parties (20, 21), un talon (27) présentant du côté extérieur une surface d'accouplement plane (28).

8. Moule pour la mise en oeuvre du procédé de fabrication selon la revendication 6, **caractérisé en ce qu'**il comprend une partie (30) comprenant une empreinte creuse (31) reproduisant la forme extérieure de ladite ferrure en L (2), une seconde partie ou noyau (32) constituée de l'association de plusieurs éléments (33), prévus aptes à pouvoir glisser l'un contre l'autre au travers de surfaces obliques (34), l'un au moins desdits éléments (33) formant coin pour permettre lors de son insertion, en étant repoussé vers l'extérieur au moyen d'une came (35), de déformer ledit noyau (32) en expansion en sorte qu'il présente extérieurement la forme intérieure de ladite ferrure en L (2).

## Patentansprüche

1. L-förmiges Beschlag erhalten durch Formen eines Verbundmaterials, umfassend zwei Teilen (20, 21), die miteinander einen Winkel bilden und mit Löchern (22, 23) durchbohrt sind, um das fest Verbinden von zwei Teilen durch Befestigungsmittel zu ermöglichen, und die mittels seitlichen Verstärkungen (24) rechtwinklig ausgestaltet sind, **dadurch gekennzeichnet, dass** mindestens einer (21) der zwei Teile (20, 21) an der Innenseite des Beschlags (2) ein konkav gekrümmtes Profil aufweist, und dadurch, dass das bzw. die in dem bzw. den Teilen (20, 21), die an der Innenseite ein konkav gekrümmtes Profil aufweisen, vorgesehenen Löcher (23) jeweils entlang einer zur Krümmung radialen Achse ausgestaltet sind.

2. L-förmiges Beschlag nach Anspruch 1, **dadurch gekennzeichnet, dass** der Bereich (26) der Verbindung der zwei Teile (20, 21) mit einander an der Innenseite ein konkav gekrümmtes Profil aufweist.

3. L-förmiges Beschlag nach Anspruch 1 oder Anspruch 2, **dadurch gekennzeichnet, dass** die seitlichen Verstärkungen (24) an der Innenseite ein konkav gekrümmtes Profil aufweisen.

4. L-förmiges Beschlag nach irgendeinem der vorhergehenden Ansprüche, **dadurch gekennzeichnet, dass** mindestens einer der Teile (20, 21) eine ebene äußere Kupplungsfläche (28, 29) aufweist.

5. L-förmiges Beschlag nach Anspruch 4, **dadurch gekennzeichnet, dass** die ebene äußere Kupplungsfläche (28) von einem der Teile (21) aus der Außenfläche eines außen an dem besagten konvexen Teil (21) geformten Elementes (27) besteht.

6. Verfahren zur Herstellung des L-förmigen Beschlags erhalten durch Formen eines Verbundmaterials nach einem der vorhergehenden Ansprüche, **dadurch gekennzeichnet, dass** es darin besteht, die folgenden aufeinanderfolgenden Schritte auszuführen :
- auf die Innenwände des Hohlraums (31) einer Gussform (30), der die dem besagten L-förmigen Beschlag zu verleihende äußere Gestalt nachbildet, vorimprägnierte Fasern in der Form von Geweben oder Folien (2) anordnen,
- in den besagten Hohlraum (31) einem Kern mit variabler Geometrie (32) einführen,
- den besagten Kern (32) nach außen erweitern, bis er auswendig die innere Gestalt des besagten L-förmigen Beschlags (2) annimmt,
- besondere Druck- und/oder Temperaturbedingungen anwenden, so dass die Polymerisierung des Verbundmaterials zustande gebracht wird.

7. Verfahren nach Anspruch 6, **dadurch gekennzeichnet, dass** an mindestens einen der beiden Teile (20, 21) einen Ansatz (27) geformt wird, der an der Außenseite eine ebene Kupplungsfläche (28) aufweist.

8. Gussform zur Durchführung des Herstellungsverfahrens nach Anspruch 6, **dadurch gekennzeichnet, dass** sie einen Teil (30), der einen Hohlraum (31) umfasst, der die äußere Gestalt des besagten L-förmigen Beschlags (2) nachbildet, einen zweiten Teil oder Kern (32), der aus der Zusammenfügung von mehreren Elementen (33) besteht, die geeignet vorgesehen sind, um über Schrägflächen (34) gegen einander zu gleiten, umfasst, wobei zumindest eines der besagten Elemente (33) einen Keil bildet, um es während seiner Einführung, indem es mittels eines Nockens (35) nach außen gedrückt wird, zu ermöglichen, den besagten Kern (32) zu erweitern, so dass er auswendig die innere Gestalt des besagten L-förmigen Beschlags (2) aufweist.

## Claims

1. L-shaped fitting obtained after molding a composite material, comprising two portions (20, 21) forming between them an angle, having holes (22, 23) formed therein for permitting to make two parts integral through fixing means, and at right angles by means of side reinforcements (24), wherein at least one (21) of said two portions (20, 21) has, on the inner side of the fitting (2), a concave curved profile, and wherein the hole or holes (23), provided for in the portion or portions (20, 21) having on the inner side a concave curved profile, are each made according to an axis radial to the curvature.

2. L-shaped fitting according to claim 1, wherein the area (26) for connecting the two portions (20, 21) to each other has, on the inner side, a concave curved profile.

3. L-shaped fitting according to claim 1 or claim 2, wherein the side reinforcements (24) have a concave curved profile on the inner side.

4. L-shaped fitting according to any of the preceding claims, wherein at least one of the portions (20, 21) has a flat coupling outer face (28, 29).

5. L-shaped fitting according to claim 4, wherein the flat coupling outer face (28) of one of the portions (21) consists of the outer face of an element (27) molded on said externally convex portion (21).

6. Method for producing the L-shaped fitting obtained after molding of a composite material according to any of the preceding claims, wherein it consists in performing the following successive steps :
- arranging on the inner walls of the hollow cavity (31) of a mold (30) reproducing the outer shape to be conferred to said L-shaped fitting (2) preimpregnated fibers in the form of fabrics or mats,
- inserting into said cavity (31) a varying-geometry core (32),
- developing outwardly said core (32) until it adopts externally the inner shape of said L-shaped fitting (2),
- applying special pressure and/or temperature conditions, so as to bring about the polymerization of said composite material.

7. Method according to claim 6, wherein onto at least one of the two portions (20, 21) is molded a heel (27) having, on the outer side, a flat coupling face (28).

8. Mold for implementing the method for producing according to claim 6, wherein it includes a portion (30) comprising a hollow cavity (31) reproducing the outer shape of said L-shaped fitting (2), a second portion or core (32) formed of the association of several elements (33), designed capable of sliding against each other through oblique surfaces (34), at least one of said elements (33) forming a wedge so as to permit, during its insertion, by being pushed outwardly by means of a cam (35), to deform said core (32) in expansion so that it has externally the inner shape of said L-shaped fitting (2).
